(19)

Europäisches
Patentamt
European
Patent Office
Office européen
des brevets

(11)  **EP 3 049 830 B1**

(12)  **EUROPEAN PATENT SPECIFICATION**

(45) Date of publication and mention
of the grant of the patent:
**08.11.2017  Bulletin 2017/45**

(51) Int Cl.:
***G01V 1/00*** *(2006.01)*      ***G01V 1/38*** *(2006.01)*

(21) Application number: **14776628.1**

(86) International application number:
**PCT/EP2014/070379**

(22) Date of filing: **24.09.2014**

(87) International publication number:
**WO 2015/044207 (02.04.2015 Gazette 2015/13)**

(54)  **SYSTEMS AND METHODS FOR FAR FIELD SIGNATURE RECONSTRUCTION USING DATA FROM NEAR FIELD, MID FIELD, AND SURFACE FIELD SENSORS**

SYSTEME UND VERFAHREN ZUR FERNFELDSIGNATUR-REKONSTRUKTION MITTELS NAHFELD- UND MITTELFELDDATEN UND OBERFLÄCHENFELDSENSOREN

SYSTÈMES ET PROCÉDÉS POUR RECONSTRUCTION DE SIGNATURE EN CHAMP LOINTAIN UTILISANT DES DONNÉES PROVENANT DE CAPTEURS EN CHAMP PROCHE, CHAMP INTERMÉDIAIRE ET CHAMP DE SURFACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2013  US 201361882641 P**
**14.04.2014  US 201461979280 P**

(43) Date of publication of application:
**03.08.2016  Bulletin 2016/31**

(73) Proprietor: **CGG Services SA**
**91300 Massy (FR)**

(72) Inventors:
• **PAYEN, Thierry**
**F-91300 Massy (FR)**
• **NI, Yuan**
**F-91300 Massy (FR)**

(74) Representative: **Petit, Maxime**
**Ipsilon**
**Le Centralis**
**63, avenue du Général Leclerc**
**92340 Bourg-la-Reine (FR)**

(56) References cited:
**EP-A1- 0 066 423     GB-A- 2 328 017**
**GB-A- 2 468 681     GB-A- 2 468 912**

EP 3 049 830 B1

**Description**

<u>TECHNICAL FIELD</u>

The present disclosure relates generally to seismic exploration and, more particularly, to systems and methods for far field signature reconstruction using data from near field, mid field, and surface field sensors.

<u>BACKGROUND</u>

In recent years, offshore drilling has become an increasingly important method of locating and retrieving oil and gas. But because drilling offshore involves high costs and high risks, marine seismic surveys are used to produce an image of subsurface geological structures. While the image may not directly show the location of oil or gas, those trained in the field can use such images to more accurately predict the location of oil and gas and thus reduce the chance of drilling a non-productive well.

Marine seismic surveys are usually accomplished by marine survey ships towing a signal source and seismic sensors. Each seismic sensor, or "sensor," may be a hydrophone, which detects variations in pressure below the ocean surface. The sensors are contained within or attached to a cable that is towed behind the moving ship. The cables are often multiple kilometers in length and each has many sensors. The towing process is referred to as "streaming" the cable, and the cables themselves are referred to as "streamer cables." In most surveys, the marine survey ship tows multiple streamer cables. The ship may tow streamer cables at the same depth or at different depths. One or multiple depth positioning devices can act to hold portions of the streamer cable below the ocean surface at a desired depth. Streamer cables may be positioned at a constant depth below the ocean surface, or they may have a variable depth profile, according to the design of the survey.

Marine survey ships also tow a signal source. The signal source generates a seismic signal, which is a series of seismic waves that travel in various directions including toward the ocean floor. The seismic waves penetrate the ocean floor and are at least partially reflected by interfaces between subsurface layers having different seismic wave propagation speeds. Sensors detect and receive these reflected waves. Sensors transform the seismic waves into seismic traces suitable for analysis. Sensors are in communication with a computer or recording system, which records the seismic traces from each sensor. A seismic trace thus represents the seismic waves received at a sensor from a source.

Each seismic trace typically contains contributions corresponding to multiple reflected waves that travel different paths from the signal source to the seismic sensor. For example, a given sensor may detect waves reflected from an interface at a shallow depth below the surface at one time, and detect waves reflected from an interface at a deeper depth at a later time. The arrival times of the waves travelling along each path may be affected by a variety of factors including the composition of the subsurface layers along each path, the depths and thicknesses of the layers along each path, the angle of the incoming wave to the interfaces between layers, and other factors. As a result, correlation of the seismic traces with the seismic signal generated by the signal source provides data on the location, orientation, structure, nature, and composition of the geological structures beneath the ocean floor.

A common type of signal source in a marine environment is a marine airgun. A marine airgun releases a quantity of high-pressure compressed air into the water when fired. The released air creates an air bubble with an internal pressure greatly exceeding the hydrostatic pressure of the surrounding water. As a result, the air bubble expands. Eventually, the internal pressure of the air bubble becomes lower than the surrounding pressure and the air bubble begins to contract until the internal pressure again becomes higher than the surrounding pressure. Thus, the air bubble oscillates between expansion and contraction below the ocean surface. This oscillation may continue for many cycles and produces the seismic waves that constitute a seismic signal. However, the initial pressure increase due to the released air, or the "primary pulse," is typically of significantly higher amplitude than the amplitude of the secondary pulses that follow.

Single airguns do not produce sufficient energy to penetrate to the desired depths under the ocean floor. Therefore, a signal source typically includes an array of multiple individual airguns configured to fire at approximately the same time. When the array is fired, the primary pulses from the airguns generally reinforce one another and produce a higher-amplitude primary pulse, while the secondary pulses tend to cancel one another out through destructive interference.

Use of an array of airguns complicates the process of determining the resulting seismic signal generated by the entire array. However, at a sufficiently large distance from the signal source, the seismic waves generated by each of the individual airguns effectively merge to produce a stable wave shape whose amplitude decreases linearly with distance. The region in which the wave shape becomes stable is referred to as the "far field," and can begin at a distance on the order of three hundred meters from the array. Subsurface geological features are typically located in the far field, so it is the shape of the seismic signal in the far field-also known as the "far field signature"-that can be important for later analysis of the seismic traces recorded during the survey.

In operation, it may not be feasible to directly measure the far field signature by placing sensors in the far field. However, at locations closer than the far field, the distance from the location to each airgun in the array can vary. This variability causes the wave shape to fluctuate with the distance from the array. As a result, sensors placed close to the array can measure a signal different from the far field signature.

Some seismic survey systems approximate the far field signature using sensors in the "mid field"-a region extending from approximately twenty meters to approximately three hundred meters away from the signal source. In these surveys, the mid field signature is treated as if it were identical to the far field signature. However, because of the differences described above between the mid field signature and the far field signature, utilizing the seismic traces produced by mid field sensors produces inferior data regarding subsurface geological structures than would be obtained were the actual far field signature used.

Some seismic survey systems attempt to approximate the far field signature using sensors in the "near field"-a region extending from approximately one meter to approximately twenty meters from individual airguns in the signal source. Sensors generally cannot be placed closer than one meter to an airgun because the sensor can become engulfed in the air bubble produced by the airgun, preventing the sensor from detecting at least some parts of the seismic waves. In these surveys, the pattern of seismic waves generated by each airgun in the signal source is determined and the far field signature is modeled. Approximating the far field signature using near field sensors also produces inferior data regarding subsurface geological structures than would be obtained using the actual far field signature.

GB2468912 describes a method of monitoring a marine seismic source array comprising, consequent to actuation of a seismic source array, making a near-field measurement of seismic energy emitted by the seismic source array, using at least one near field sensor and also acquiring seismic data using at least one seismic receiver. The far-field signature of the source array at one or more of the receiver location(s) is estimated from the near-field measurements of the emitted seismic energy.

Accordingly, methods and systems capable of utilizing measurements from sensors located in different fields to improve the far field signature are needed.

SUMMARY

In accordance with one or more embodiments of the present disclosure, a method for reconstructing the far field signature of a signal source includes receiving a first trace from a first sensor. The method also includes receiving a second trace from a second sensor located in a different field from the first sensor. The method additionally includes receiving position information for the first sensor and for the second sensor. The method further includes computing a plurality of notional signatures based on the first trace, the second trace, and the position information. The method also includes determining a far field signature by combining the plurality of notional signatures.

In accordance with another embodiment of the present disclosure, a seismic survey system includes a source array comprising a plurality of seismic energy sources. The system also includes a first sensor configured to transform seismic waves into a first trace, and a second sensor (located in a different field from the first sensor) configured to transform seismic waves into a second trace. The system further includes a computing system communicatively coupled to the source array, the first sensor, and the second sensor. The computing system includes a processor, a memory communicatively coupled to the processor, and instructions stored in the memory. Those instructions when executed by the processor, cause the processor to receive the first trace from the first sensor; receive the second trace from the second sensor; receive position information for the first sensor and for the second sensor; compute a plurality of notional signatures based on the first trace, the second trace, and the position information; and determine a far field signature by combining the plurality of notional signatures.

In accordance with another embodiment of the present disclosure, a non-transitory computer-readable medium includes instructions that, when executed by a processor, cause the processor to receive a first trace from a first sensor; receive a second trace from a second sensor; receive position information for the first sensor and for the second sensor; compute a plurality of notional signatures based on the first trace, the second trace, and the position information; and determine a far field signature by combining the plurality of notional signatures.

BRIEF DESCRIPTION OF THE DRAWINGS

For a more complete understanding of the present disclosure and its features and advantages, reference is now made to the following description, taken in conjunction with the accompanying drawings, which may include drawings that are not to scale and wherein like reference numbers indicate like features, in which:

FIGURE 1 illustrates a side view of an example marine seismic survey system used for reconstructing the far field signature of a signal source in accordance with some embodiments of the present disclosure;
FIGURE 2 illustrates a flow chart of an example method for reconstructing the far field signature of a signal source using data from near field and mid field sensors in accordance with some embodiments of the present disclosure;
FIGURE 3 illustrates a flow chart of an example method for computing notional signatures using data from near field and mid field sensors in accordance with some embodiments of the present disclosure;
FIGURE 4 illustrates a flow chart of an example method for computing notional signatures using a surface reflection coefficient in accordance with some embodiments of the present disclosure;
FIGURE 5 illustrates a flow chart of an example method for computing notional signatures by combining preliminary notional signatures in accordance with some embodiments of the present disclosure;
FIGURE 6 illustrates a flow chart of an example method for computing notional signatures by iteratively adjusting the position information and a surface reflection coefficient in accordance with some embodiments of the present disclosure; and
FIGURE 7 illustrates a flow chart of an example method for computing notional signatures using additional data from surface field sensors in accordance with some embodiments of the present disclosure.

## DETAILED DESCRIPTION

The present disclosure is directed to methods and systems of reconstructing the far field signature of a seismic energy source by combining data from near field and mid field sensors. The system includes at least one sensor positioned in the "near field," which extends from approximately one meter to twenty meters away from the signal source towed behind the survey ship, and at least one sensor positioned in the "mid field," which extends from approximately twenty meters to three hundred meters from the signal source. The system may include multiple sensors in each field, and may also include sensors in the "surface field" located within approximately one meter of the ocean surface. Using seismic traces from sensors located in both the near field and the mid field in the same computation, a more accurate reconstruction of the far field signature of the source may be obtained than is available using seismic traces from one field alone. Subsurface geological features are typically located in the far field, so it is the far field signature that can be important for later analysis of the seismic traces recorded during the survey.

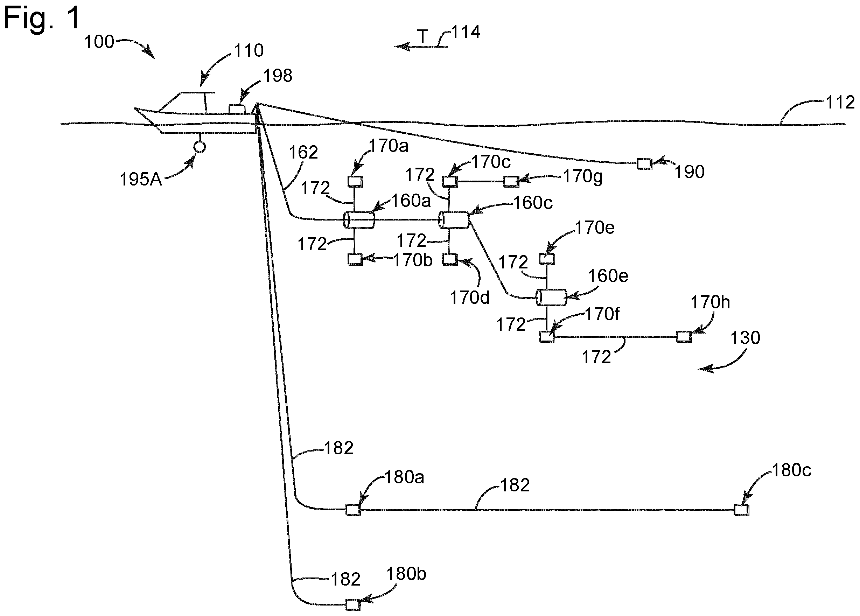

FIGURE 1 illustrates a side view of an example marine seismic survey system 100 used for reconstructing the far field signature of signal source in accordance with some embodiments of the present disclosure. Seismic survey system 100 includes signal source 130 and marine survey ship 110. Ship 110 may be traveling in direction "T" shown by directional arrow 114. Signal source 130 includes an array of seismic energy sources 160a, 160c, and 160e (collectively "seismic energy sources 160") towed behind ship 110. Seismic energy sources 160 may also be referred to as "seismic sources," "energy sources," or "sources." Seismic survey system 100 may also include near field sensors 170a-170h (collectively referred to as "near field sensors 170"), mid field sensors 180a-180c (collectively referred to as "mid field sensors 180"), and surface field sensor 190. Near field sensors 170, mid field sensors 180, and surface field sensor 190 may be towed behind ship 110 and positioned relative to signal source 130.

In some embodiments, near field sensors 170 are positioned within the near field-between approximately one meter and twenty meters from one of seismic energy sources 160. For example, near field sensors 170a and 170b may be positioned approximately two meters above and two meters below seismic energy source 160a, respectively. As another example, near field sensors 170c and 170d may be positioned approximately two meters above and two meters below seismic energy source 160b, respectively, and near field sensors 170e and 170f may be positioned approximately two meters above and two meters below seismic energy source 160e, respectively. In some embodiments, other near field sensors 170 are positioned at other distances or in other directions. For example, near field sensor 170g may be positioned above and behind seismic energy source 160c at a distance of approximately five meters, or near field sensor 170h may be positioned below and behind seismic energy source 160e at a distance of approximately ten meters. Although a specific number of near field sensors 170 is depicted, any appropriate number of near field sensors 170 may be used. Furthermore, near field sensors 170 may be positioned at any appropriate set of locations within the near field, with any appropriate combination of in-line offset (along the direction T), cross-line offset (perpendicular to direction T with respect to the sea surface plane), and depth offset from seismic energy sources 160. In some embodiments, near field sensors 170 can be coupled to seismic energy sources 160 or other near field sensors 170 via cables 172. For example, near field sensor 170a may be coupled to seismic energy source 160a via cable 172. In some embodiments, one or more near field sensors 170 may be coupled to a streamer line (not shown), or maintained in a selected position or location using any other suitable positioning system.

In some embodiments, mid field sensors 180 are positioned within the mid field-between approximately twenty meters and three hundred meters from seismic energy sources 160. For example, mid field sensor 180a may be positioned approximately one hundred and fifty meters below seismic energy source 160a and mid field sensor 180b may be positioned approximately fifty meters below mid field sensor 180a. A particular mid field sensor 180 may be positioned approximately directly below a particular seismic energy source 160 or may be offset in any direction from directly below a particular seismic energy source 160. In some embodiments, other mid field sensors 180 are positioned at other distances or in other directions. For example, mid field sensor 180c may be positioned approximately one hundred meters behind mid field sensor 180a, at a distance of approximately one hundred eighty meters from seismic energy source 160a. Although a specific number of mid field sensors 180 is depicted, any appropriate number of mid field sensors 180 may be used. Furthermore, mid field sensors 180 may be positioned at any appropriate set of locations within the mid field, with any appropriate combination of in-line offset, cross-line offset, and depth offset from seismic energy sources 160. In some embodiments, mid field sensors 180 may be attached to a particular streamer line 182 or maintained in a selected position or location using any other suitable positioning system.

In some embodiments, surface field sensor 190 may be positioned within one meter of ocean surface 112. Although only one surface field sensor 190 is depicted, any appropriate number of surface field sensors 190 may be used. Furthermore, surface field sensor 190 may be positioned at any appropriate locations within the surface field, with any appropriate combination of in-line offset, cross-line offset, and depth offset from seismic energy sources 160. In some embodiments, surface field sensor 190 is coupled to streamer line 192 or maintained in a selected position or location using any other suitable positioning system.

A sensor may be described as "located in a different field" from another sensor based on the positions of the two sensors. For example, near field sensor 170a is located in a different field from mid field sensor 180a because near field sensor is positioned in the near field while mid field sensor 180a is positioned in the mid field. By contrast, near field sensor 170a is located in the same field as near field sensor 170b because both are positioned in the near field.

In some embodiments, near field sensors 170, mid field sensors 180, and surface field sensor 190 may be hydrophones, which detect pressure fluctuations in the surrounding water, or any other suitable sensor. Each near field sensor 170, mid field sensor 180, and surface field sensor 190 detects seismic waves received from seismic energy sources 160 and transforms the seismic waves into a seismic trace. A seismic trace may be digital sample data, an analog electrical signal, or any other appropriate representation of the seismic waves detected by the sensor. Seismic traces may be referenced based on the location of the sensor that detected the waves represented in the trace. For example, a "near field trace" may be a seismic trace from a particular near field sensor 170, a "mid field trace" may be a seismic trace from a particular mid field sensor 180, and a "surface field trace" may be a seismic trace from a particular surface field sensor 190. A seismic trace from an unspecified sensor may be referred to as a "trace."

Seismic energy sources 160 can be any suitable seismic energy source. For example, seismic energy sources 160 may be marine airguns, which generate a high-pressure oscillating air bubble. In some embodiments, seismic energy source 160a and seismic energy source 160c are at approximately the same depth below ocean surface 112, for example approximately ten meters. Seismic energy sources 160a and 160c may be positioned at a predetermined horizontal distance from one another, for example approximately three meters. In some embodiments, seismic energy source 160e is at a different depth from seismic energy sources 160a and 160c. Although only three seismic energy sources 160 are depicted, any appropriate number of seismic energy sources 160 may be used. Furthermore, seismic energy sources 160 may be arranged in any appropriate geometry and positioned at any appropriate depth, according to the design of the seismic survey. For example, seismic energy sources 160 may be coupled to streamer line 162 or maintained in a selected position or location using any other suitable positioning system.

In some embodiments, the positions of seismic energy sources 160, near field sensors 170, mid field sensors 180, and surface field sensor 190 are monitored using one or more position-measurement mechanisms. For example, seismic survey system 100 may include an ultra-short baseline (USBL) transceiver 195 attached to ship 110, which measures an angle and distance to each element of signal source 130 using acoustic pulses. Seismic survey system 100 may also include depth sensors, GPS sensors, visible light or infrared transceivers, or any other mechanisms suitable for measuring the positions of the elements of signal source 130.

In some embodiments, seismic survey system 100 also includes computing system 198. Near field sensors 170, mid field sensors 180, and surface field sensor 190 transmit seismic traces to computing system 198. Computing system 198 receives position data reflecting the positions of the elements of seismic survey system 100. In some embodiments, computing system 198 analyzes the seismic traces and position data to reconstruct a far field signature according to the methods discussed below. In some embodiments, computing system 198 stores the seismic traces and position data for later analysis, either by computing system 198 or by some other computing system. In some embodiments, computing system 198 or some other computing system utilizes the reconstructed far field signature to analyze other seismic traces created during the seismic survey. In some embodiments, computing system 198 or some other computing system utilizes the reconstructed far field signature to generate an image of subsurface geological structures.

Computing system 198 may include any instrumentality or aggregation of instrumentalities operable to compute, classify, process, transmit, receive, store, display, record, or utilize any form of information, intelligence, or data. For example, computing system 198 may include one or more personal computers, storage devices, servers, or any other suitable device and may vary in size, shape, performance, functionality, and price. Computing system 198 may include random access memory (RAM), one or more processing resources, such as a central processing unit (CPU) or hardware or software control logic, or other types of volatile or non-volatile memory. Additional components of computing system 198 may include one or more disk drives, one or more network ports for communicating with external devices, one or more input/output (I/O) devices, such as a keyboard, a mouse, or a video display. Computing system 198 may be configured to permit communication over any type of network, such as a wireless network, a local area network (LAN), or a wide area network (WAN) such as the Internet. Furthermore, computing system 198 may be located in any suitable enclosure, and may be located on ship 110, on another ship, on shore, or in any other suitable location.

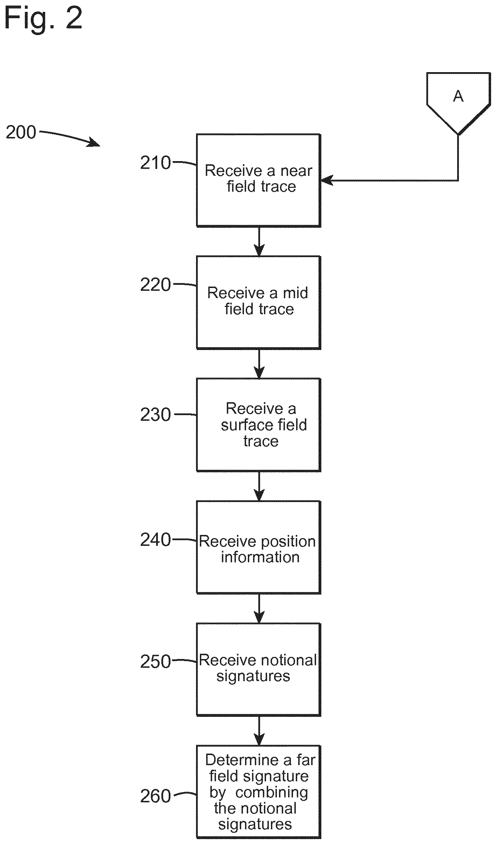

FIGURE 2 illustrates a flow chart of an example method 200 for reconstructing the far field signature of a signal source using data from near field and mid field sensors in accordance with some embodiments of the present disclosure. For illustrative purposes, method 200 is described with respect to signal source 130 in seismic survey system 100, discussed with respect to FIGURE 1; however, method 200 may be used to reconstruct the far field signature of any appropriate signal source. The steps of method 200 can be performed by a user, electronic or optical circuits, various computer programs, models, or any combination thereof, configured to process seismic traces. The programs and models may include instructions stored on a non-transitory computer-readable medium and operable to perform, when executed, one or more of the steps described below. The computer-readable media can include any system, apparatus, or device configured to store and retrieve programs or instructions such as a hard disk drive, a compact disc, flash memory, or any other suitable device. The programs and models may be configured to direct a processor or other suitable unit to retrieve and execute the instructions from the computer readable media. Collectively, the user, circuits, or computer programs and models used to process seismic traces may be referred to as a "processing tool." For example, the processing tool may be computing system 198 located on ship 110, discussed with reference to FIGURE 1. In some embodiments, the processing tool is located elsewhere, and receives information stored during the seismic survey. For example, computing system 198 may record seismic traces and position information and deliver them to an on-shore computing system for processing at a later time.

Method 200 begins at step 210, where the processing tool receives a near field trace from a near field sensor. For example, the processing tool may receive a near field trace from near field sensor 170a, discussed with reference to FIGURE 1. In some embodiments, the processing tool receives multiple near field traces, each from a separate near field sensor. For example, the processing tool may receive separate near field traces from near field sensors 170a-170h. In some embodiments, the processing tool receives the near field traces indirectly from the near field sensors. For example, computing system 198 may store near field traces from near field sensors 170a-170h and deliver them to the processing tool at a later time.

In step 220, the processing tool receives a mid field trace from a mid field sensor. For example, the processing tool may receive a mid field trace from mid field sensor 180a, discussed with reference to FIGURE 1. In some embodiments, the processing tool receives multiple mid field traces, each from a separate mid field sensor. For example, the processing tool may receive separate mid field traces from mid field sensors 180a-180c. In some embodiments, the processing tool receives the mid field traces indirectly from the mid field sensors. For example, computing system 198 may store mid field traces from mid field sensors 180a-180c and deliver them to the processing tool at a later time.

In step 230, the processing tool receives a surface field trace from a surface field sensor. For example, the processing tool may receive a surface field trace from surface field sensor 190, discussed with reference to FIGURE 1. In some embodiments, the processing tool receives multiple surface field traces, each from a separate surface field sensor. In some embodiments, the processing tool receives the surface field traces indirectly from the surface field sensors. For example, computing system 198 may store surface field traces from surface field sensor 190 and deliver them to the processing tool at a later time.

In step 240, the processing tool receives position information regarding the sensors and the seismic energy sources. For example, the processing tool may receive position information regarding near field sensors 170a-170h, mid field sensors 180a-180c, surface field sensor 190, and seismic energy sources 160a-160c, discussed with respect to FIGURE 1. In some embodiments, the processing tool receives the position information indirectly. For example, computing system 198 may store the position information and deliver it to the processing tool at a later time. The position information may be generated using ultra-short baseline (USBL) systems, global positioning systems (GPS), depth sensors, visible or infrared signaling systems, or any other suitable position-measuring mechanism.

In step 250, the processing tool computes a set of "notional signatures" based at least on the near field traces and the mid field traces. In some embodiments, the notional signatures are also based on the surface field trace, the position information, or other suitable data. A notional signature is a mathematical model of a hypothetical seismic energy source, for example an oscillating air bubble expelled by a marine airgun, that does not interact with the seismic waves generated by other seismic energy sources. When an array of airguns is fired, the seismic waves created by each air bubble change the hydrostatic pressure of the water surrounding every other bubble, thus altering their oscillation patterns in a non-linear fashion. Rather than modelling the actual oscillations of the physical bubbles, the processing tool computes a model of a "notional" non-interacting bubble corresponding to each bubble created by the signal source. For example, in some embodiments the $n$th notional signature $P_n(t,r)$ is modeled as having spherical symmetry according to the following equation:

$$P_n(t,r) = \frac{1}{r_n} p_n\left(t - \frac{r_n}{c}\right) \tag{1}$$

where

$t$ = time;
$r_n$ = distance to notional bubble number $n$; and
$p_n(t)$ = "driving pressure" of notional bubble number $n$ (equal to the difference between the modeled internal pressure of notional bubble number $n$ at time $t$ and the hydrostatic pressure outside notional bubble $n$ at time $t$); and
$c$ = speed of sound in water.

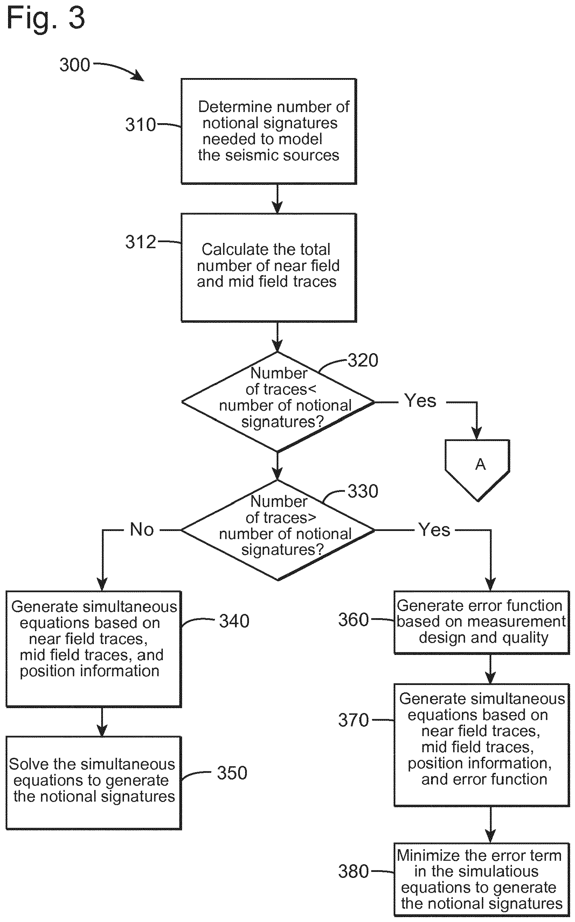

The modeled oscillations of each notional bubble incorporate the non-linear interactions between the physical bubbles. For example, the driving pressure of each notional bubble may include terms that represent the effect of seismic waves generated by each other notional bubble. This model is referred to as a "notional signature." There are many possible methods by which the traces and the position information may be used to compute a set of notional signatures. A number of example methods for step 250 are discussed in FIGURES 3-7 below. However, any method which utilizes at least one near field and at least one mid field trace is intended to be encompassed within the present disclosure.

In step 260 the processing tool determines a far field signature by combining the notional signatures. In some embodiments, the far field signature is a linear superposition of the notional signatures. Because the notional bubbles represented by the notional signatures do not interact, they may be linearly superimposed to produce a model of the far field signature. For example, in some embodiments the far field signature $F(t,loc)$ is modeled as a sum of notional signatures each having spherical symmetry according to the following equation:

$$F(t, loc) = \sum_{n=1}^{N} \left( P_n\left(t, r_{n,loc}\right) + k * P_n\left(t, rg_{n,loc}\right) \right) \tag{2}$$

where

$t$ = time;
$loc$ = location at which F is being calculated;
$N$ = number of notional signatures;
$r_{n,loc}$ = distance from location $loc$ to notional bubble number $n$;
$rg_{n,loc}$ = distance from location $loc$ to the "ghost" of notional bubble number $n$ (caused by reflection from the sea surface); and
$k$ = the surface reflection coefficient.

Modifications, additions, or omissions may be made to method 200 without departing from the scope of the present disclosure. For example, the steps may be performed in a different order than that described and some steps may be performed at the same time. For example, the processing tool may receive traces and position information in any order or simultaneously. Further, more steps may be added or steps may be removed without departing from the scope of the disclosure. Additionally, each individual step may include additional steps without departing from the scope of the present disclosure. In particular, step 250-computing notional signatures-may be implemented in a variety of ways, as discussed previously.

FIGURE 3 illustrates a flow chart of an example method 300 for computing notional signatures using data from near field and mid field sensors in accordance with some embodiments of the present disclosure. For illustrative purposes, method 300 is described with respect to signal source 130 in seismic survey system 100, discussed with respect to FIGURE 1; however, method 300 may be used to compute notional signatures for any appropriate signal source. The steps of method 300 can be performed by a user, electronic or optical circuits, various computer programs, models, or any combination thereof, configured to process seismic traces. The programs and models may include instructions stored on a non-transitory computer-readable medium and operable to perform, when executed, one or more of the steps described below. The computer-readable media can include any system, apparatus, or device configured to store and retrieve programs or instructions such as a hard disk drive, a compact disc, flash memory, or any other suitable device. The programs and models may be configured to direct a processor or other suitable unit to retrieve and execute the instructions from the computer readable media. As discussed previously, collectively, the user, circuits, or computer programs and models used to process seismic traces may be referred to as a "processing tool." For example, the processing tool may be computing system 198 located on ship 110, discussed with respect to FIGURE 1. In some embodiments, the processing tool is located elsewhere, and receives information stored during the seismic survey. For example, computing system 198 may record seismic traces and position information and deliver them to an on-shore computing system for processing at a later time. Method 200, discussed with respect to FIGURE 2 may utilize method 300 to implement step 250; however, the processing tool performing the steps of method 300 may be the same processing tool performing the steps of method 200, or a different processing tool.

Method 300 begins at step 310, where the processing tool determines the number of notional signatures needed to model the seismic sources. The number of notional signatures may be based on the number of seismic energy sources that generated the seismic traces recorded in steps 210-230 of method 200 discussed with reference to FIGURE 2. For example, the number of notional signatures may equal or approximate the number of seismic energy sources 160a, 160c, and 160e (or three notional signatures) in signal source 130, discussed with reference to FIGURE 1. In some embodiments, the number of notional signatures may account for reflection of the seismic waves off the ocean surface, known as "surface reflection." Surface reflection can be modeled by the addition of a virtual seismic energy source for each actual seismic energy source. In this case, the number of notional signatures is twice the number of seismic energy sources 160 in signal source 130 (six notional signatures). The selection of the number of notional signatures may be based on the design of the seismic survey, the depth of the seismic energy sources 160, the time needed for or cost associated with subsequent seismic analysis, or any other suitable parameter.

In step 312, the processing tool calculates the total number of near field and mid field traces received from the near field and mid field sensors. For example, the processing tool may have received eight near field traces from near field sensors 170a-170h, and three mid field traces from mid field sensors 180a-180c, for a total of eleven traces.

In step 320, the processing tool determines if the number of traces received is less than the determined number of notional signatures. If the number of traces is less than the number of notional signatures, method 300 returns to step 210. For example, if only five traces were received by the processing tool and six notional signatures are needed, an error may have occurred within the seismic survey or analysis system. If the number of traces is greater than or equal to the number of notional signatures needed, method 300 proceeds to step 330.

In step 330, the processing tool determines whether the number of traces is greater than the number of notional signatures needed. If the number of traces is equal to the number of notional signatures needed, method 300 proceeds to step 340.

In step 340, the processing tool generates a set of simultaneous equations based on the near field traces, the mid field traces, and the position information. In some embodiments, the seismic waves generated by an air bubble, $P(t,r)$, are modeled as having spherical symmetry according to the following equation:

$$P(t,r) = \frac{1}{r}p\left(t - \frac{r}{c}\right) \tag{3}$$

where

> $t$ = time;
> $r$ = distance to the bubble;
> $p(t)$ = "driving pressure" of the air bubble (equal to the difference between internal pressure of the air bubble at time $t$ and the hydrostatic pressure outside the bubble at time t); and
> c = speed of sound in water.

To compute the driving pressure of each bubble, the processing tool may need to account for the non-linear interactions of the air bubbles discussed above in connection with step 250 in FIGURE 2. For example, where two bubbles are involved, the seismic waves generated by the first bubble will cause changes in the hydrostatic pressure outside the second bubble, and vice-versa. Thus, the driving pressure $p_1(t)$ of the first notional bubble may include a term corresponding to the seismic waves generated by the second bubble. Additional terms and equations can be added to model the effects of a third bubble or any additional number of bubbles. Although one potential method of generating a set of simultaneous equations is discussed in detail, any other suitable method for generating a set of simultaneous equations given at least a set of traces and position information may be used in step 340. For example, the model of each notional air bubble may include one or more parameters that vary according to direction, rather than being spherically symmetric. The equations may also include terms that model weather conditions or other relevant factors.

In step 350, the processing tool solves the set of simultaneous equations generated in step 340 to generate the notional signatures. Because the number of variables (corresponding to notional signatures) equals the number of equations (corresponding to traces), the system of simultaneous equations is solvable. For example, the system of simultaneous equations may be solved using matrix inversion in either the time or frequency domain. Method 300 returns the resulting notional signatures to step 260 of method 200 shown in FIGURE 2.

If at step 330, the number of traces is greater than the number of notional signatures needed, method 300 proceeds to step 360, where the processing tool generates an error function based on the measurement design and perceived measurement quality. In this case, if a system of equations were constructed according to step 340, the number of equations (corresponding to traces) would exceed the number of variables (corresponding to notional signatures), making the system of equations overdetermined and therefore, in general, unsolvable. However, an error function may be constructed which incorporates additional unknown quantities. For example, the error function may include the root mean square of the difference between an estimated signature at the location of a sensor and the seismic signature detected by that sensor. In some embodiments, the error function may be a weighted average of components corresponding to the near field traces and components corresponding to the mid field traces. Near field measurements may give improved estimates of the notional signatures in low frequencies, while mid field measurements give improved estimates of the notional signatures in high frequencies. As a result, the weighting factors may be chosen to suit the needs of the survey and later processing of the recorded traces. In some embodiments, higher weight is placed on the components corresponding to the near field traces. In some embodiments, higher weight is placed on the components corresponding to the mid field traces. In some embodiments, the weight placed on each component varies as a function of frequency.

In step 370, the processing tool generates a set of simultaneous equations based on the near field traces, the mid field traces, the position information, and the error function generated in step 360. In some embodiments, the simultaneous equations are generated using the equations described in connection with step 340, with an additional term incorporating the error function generated in step 360.

In step 380, the processing tool minimizes the error function in the simultaneous equations generated in step 370 to generate the notional signatures. Mathematical methods for solving an overdetermined set of simultaneous equations by minimizing error functions can include algebraic functions, matrix transformations, or other suitable methods. Method 300 returns to step 260 of method 200 shown in FIGURE 2.

Modifications, additions, or omissions may be made to method 300 without departing from the scope of the present disclosure. For example, the steps may be performed in a different order than that described and some steps may be performed at the same time. For example step 310 may be performed before or after step 312. Further, more steps may be added or steps may be removed without departing from the scope of the disclosure.

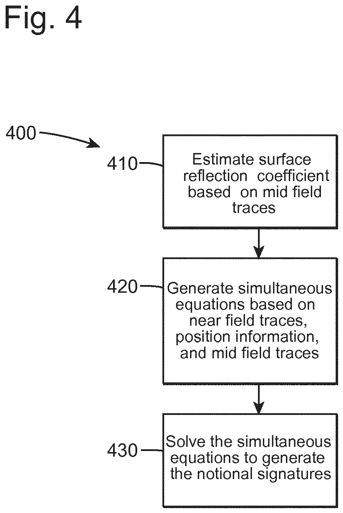

FIGURE 4 illustrates a flow chart of an example method 400 for computing notional signatures using a surface reflection coefficient in accordance with some embodiments of the present disclosure. For illustrative purposes, method 400 is described with respect to signal source 130 in seismic survey system 100, discussed with respect to FIGURE 1; however, method 400 may be used to compute notional signatures for any appropriate signal source. The steps of method 400 can be performed by a user, electronic or optical circuits, various computer programs, models, or any combination thereof, configured to process seismic traces. The programs and models may include instructions stored on a non-transitory computer-readable medium and operable to perform, when executed, one or more of the steps described below. The computer-readable media can include any system, apparatus, or device configured to store and retrieve programs or instructions such as a hard disk drive, a compact disc, flash memory, or any other suitable device. The programs and models may be configured to direct a processor or other suitable unit to retrieve and execute the instructions from the computer readable media. As discussed previously, collectively, the user, circuits, or computer programs and models used to process seismic traces may be referred to as a "processing tool." For example, the processing tool may be computing system 198 located on ship 110, discussed with respect to FIGURE 1. In some embodiments, the processing tool is located elsewhere, and receives information stored during the seismic survey. For example, computing system 198 may record seismic traces and position information and deliver them to an on-shore computing system for processing at a later time. Method 200, discussed with respect to FIGURE 2 may utilize method 400 to implement step 250; however, the processing tool performing the steps of method 400 may be the same processing tool performing the steps of method 200, or a different processing tool.

Method 400 begins at step 410, where the processing tool estimates a surface reflection coefficient based on the mid field traces. When the seismic waves generated by a seismic energy source, for example seismic energy source 160, discussed with respect to FIGURE 1, encounter ocean surface 112, the seismic waves are reflected back downward with less amplitude. The surface reflection coefficient represents the ratio between the amplitude of the original wave and the amplitude of the reflected wave. For example, mid field sensors 180 can detect an original wave, which travels on a direct path from seismic energy source 160a, and an inverted "ghost" wave corresponding to the reflection from the surface. Because the depth of seismic energy source 160a is generally smaller than or comparable to the wavelength of the seismic waves, the ghost wave may overlap with and even destructively interfere with the original wave. This destructive interference may result in a "notch" in the spectrum of energy detected by mid field sensors 180. The peak depth of the notch indicates the amount of the original wave canceled by the ghost wave, and thus indicates the surface reflection coefficient.

In step 420, the processing tool generates a set of simultaneous equations based on the near field traces, the mid field traces, the position information, and the surface reflection coefficient estimated in step 410. For example, the processing tool may model the seismic waves generated by each air bubble using equations (3) and (4), discussed above in connection with step 340, discussed with relation to FIGURE 3. The processing tool may model surface reflection by including in each equation a term corresponding to the reflection of the wave from ocean surface 112, discussed with relation to FIGURE 1.

In step 430, the processing tool solves the set of simultaneous equations to generate the notional signatures. For example, if the number of desired notional signatures equals the number of traces, the system may be solved using matrix inversion in either the time or frequency domain as described in step 350, discussed with respect to FIGURE 3. If the number of desired notional signatures is less than the number of traces, the system may be solved by minimizing an error function as described in step 380, discussed with respect to FIGURE 3. Method 400 returns the resulting notional signatures to step 260 of method 200 shown in FIGURE 2.

Modifications, additions, or omissions may be made to method 400 without departing from the scope of the present disclosure. For example, step 420 may be performed before step 410. Further, more steps may be added or steps may be removed without departing from the scope of the disclosure.

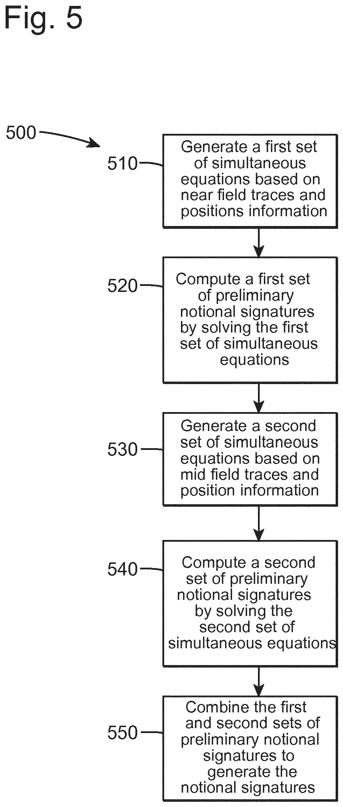

FIGURE 5 illustrates a flow chart of an example method 500 for computing notional signatures by combining preliminary notional signatures in accordance with some embodiments of the present disclosure. For illustrative purposes, method 500 is described with respect to signal source 130 in seismic survey system 100, discussed with respect to FIGURE 1; however, method 500 may be used to compute notional signatures for any appropriate signal source. The steps of method 500 can be performed by a user, electronic or optical circuits, various computer programs, models, or any combination thereof, configured to process seismic traces. The programs and models may include instructions stored on a non-transitory computer-readable medium and operable to perform, when executed, one or more of the steps described below. The computer-readable media can include any system, apparatus, or device configured to store and retrieve programs or instructions such as a hard disk drive, a compact disc, flash memory, or any other suitable device. The programs and models may be configured to direct a processor or other suitable unit to retrieve and execute the instructions from the computer readable media. As discussed previously, collectively, the user, circuits, or computer programs and models used to process seismic traces may be referred to as a "processing tool." For example, the processing tool may be computing system 198 located on ship 110, discussed with respect to FIGURE 1. In some embodiments, the processing tool is located elsewhere, and receives information stored during the seismic survey. For example, computing system 198 may record seismic traces and position information and deliver them to an on-shore computing system for processing at a later time. Method 200, discussed with respect to FIGURE 2, may utilize method 500 to implement step 250; however, the processing tool performing the steps of method 500 may be the same processing tool performing the steps of method 200, or a different processing tool.

Method 500 begins at step 510, where the processing tool generates a first set of simultaneous equations based on the near field traces and the position information for the near field sensors and the seismic energy sources. For example, the processing tool may model the seismic waves generated by each air bubble using equations (3) and (4), discussed above in connection with step 340, discussed with relation to FIGURE 3.

In step 520, the processing tool computes a first set of preliminary notional signatures by solving the first set of simultaneous equations. Mathematical methods for solving a determined set of simultaneous equations can include algebraic functions, matrix transformations, or other suitable methods. For example, if the number of desired notional signatures equals the number of traces, the system may be solved using matrix inversion in either the time or frequency domain as described in step 350, discussed with respect to FIGURE 3. If the number of desired notional signatures is less than the number of traces, the system may be solved by minimizing an error function as described in step 380, discussed with respect to FIGURE 3.

In step 530, the processing tool generates a second set of simultaneous equations based on the mid field traces and the position information for the mid field sensors and the seismic energy sources. For example, the processing tool may model the seismic waves generated by each air bubble using equations (3) and (4), discussed above in connection with step 340, discussed with relation to FIGURE 3.

In step 540, the processing tool computes a second set of preliminary notional signatures by solving the second set of simultaneous equations. Mathematical methods for solving a determined set of simultaneous equations can include algebraic functions, matrix transformations, or other suitable methods. For example, if the number of desired notional signatures equals the number of traces, the system may be solved using matrix inversion in either the time or frequency domain as described in step 350, discussed with respect to FIGURE 3. If the number of desired notional signatures is less than the number of traces, the system may be solved by minimizing an error function as described in step 380, discussed with respect to FIGURE 3.

In step 550, the processing tool combines the first and second sets of notional signatures. In some embodiments, the notional signatures are a weighted average of the first set of notional signatures and the second set of notional signatures. In general, near field measurements give more accurate estimates of the notional signatures in low frequencies, while mid field measurements give more accurate estimates of the notional signatures in high frequencies. As a result, the weighting factors may be chosen to suit the design of the survey and later processing of the recorded traces.

In some embodiments, higher weight is placed on the near field traces, while in other embodiments, higher weight is placed on the mid field traces. In some embodiments, the weight placed on each set of traces varies as a function of frequency. Method 500 returns to step 260 of method 200 shown in FIGURE 2.

Modifications, additions, or omissions may be made to method 500 without departing from the scope of the present disclosure. For example, the steps may be performed in a different order than that described and some steps may be performed at the same time. Further, more steps may be added or steps may be removed without departing from the scope of the disclosure.

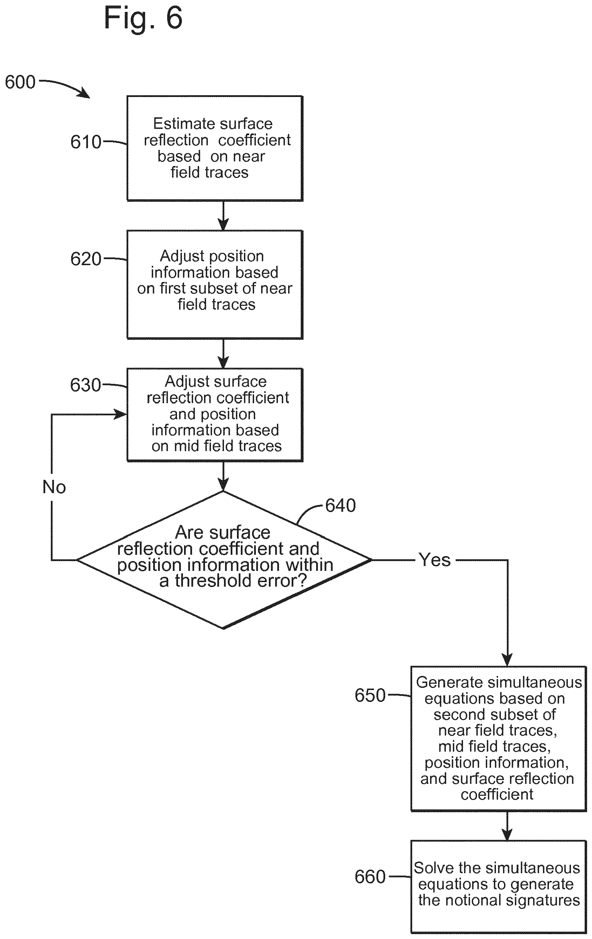

FIGURE 6 illustrates a flow chart of an example method 600 for computing notional signatures by iteratively adjusting the position information and a surface reflection coefficient in accordance with some embodiments of the present disclosure. For illustrative purposes, method 600 is described with respect to signal source 130 in seismic survey system 100, discussed with respect to FIGURE 1; however, method 600 may be used to compute notional signatures for any appropriate signal source. The steps of method 600 can be performed by a user, electronic or optical circuits, various computer programs, models, or any combination thereof, configured to process seismic traces. The programs and models may include instructions stored on a non-transitory computer-readable medium and operable to perform, when executed, one or more of the steps described below. The computer-readable media can include any system, apparatus, or device configured to store and retrieve programs or instructions such as a hard disk drive, a compact disc, flash memory, or any other suitable device. The programs and models may be configured to direct a processor or other suitable unit to retrieve and execute the instructions from the computer readable media. As discussed previously, collectively, the user, circuits, or computer programs and models used to process seismic traces may be referred to as a "processing tool." For example, the processing tool may be computing system 198 located on ship 110, discussed with respect to FIGURE 1. In some embodiments, the processing tool is located elsewhere, and receives information stored during the seismic survey. For example, computing system 198 may record seismic traces and position information and deliver them to an on-shore computing system for processing at a later time. Method 200, discussed with respect to FIGURE 2, may utilize method 600 to implement step 250; however, the processing tool performing the steps of method 600 may be the same processing tool performing the steps of method 200, or a different processing tool.

Method 600 begins at step 610, where the processing tool estimates a surface reflection coefficient based on the near field traces. Step 610 may use any of the methods for estimating a surface reflection coefficient discussed above in connection with step 410, discussed with respect to FIGURE 4, except that the near field traces are used in place of the mid field traces.

In step 620, the processing tool adjusts the position information for seismic energy sources 160, discussed with respect to FIGURE 1, based on a first subset of the near field traces. For example, in some embodiments the processing tool locates the "notch" in the frequency spectrum of seismic energy source 160a as discussed above in connection with step 410, discussed with respect to FIGURE 4. The position (frequency of the peak) of the notch indicates the depth of seismic energy source 160a.

In step 630, the processing tool adjusts the source reflection coefficient and the position information for seismic energy sources 160, discussed with respect to FIGURE 1, based on the mid field traces. Step 630 may use any of the methods for estimating the source reflection coefficient and the depth and position of seismic energy sources 160 discussed above in connection with step 410, discussed with respect to FIGURE 4. In some embodiments, other methods are used. For example, the processing tool may adjust the source reflection coefficient and the position information to minimize an error function.

In step 640, the processing tool determines whether the source reflection coefficient and the position information are within a threshold error. For example, the processing tool may calculate an estimate of the error in the source reflection coefficient and the position information. In some embodiments, the processing tool compares the largest individual error to a threshold error. In some embodiments, the processing tool combines the error estimates for each measurements into a single error estimate and compares the single error estimate to a threshold error. If the source reflection coefficient and position information are not within the threshold error, method 600 returns to step 630 to further adjust the source reflection coefficient and the position information. If they are within the threshold error, method 600 proceeds to step 650.

In step 650, the processing tool generates a set of simultaneous equations based on a second subset of the near field traces (different from the first subset) and the mid field traces, along with the position information and the surface reflection coefficient adjusted in steps 620-630. Step 650 may use any method for constructing a system of equations described above in connection with step 420, discussed with respect to FIGURE 4. For example, the processing tool may model the seismic waves generated by each air bubble using equations (3) and (4), discussed above in connection with step 340, discussed with relation to FIGURE 3. The processing tool may model surface reflection by including in each equation a term corresponding to the reflection of the wave from ocean surface 112, discussed with relation to FIGURE 1.

In step 660, the processing tool solves the set of simultaneous equations to generate the notional signatures. Mathematical methods for solving a determined set of simultaneous equations can include algebraic functions, matrix transformations, or other suitable methods. For example, if the number of desired notional signatures equals the number of traces, the system may be solved using matrix inversion in either the time or frequency domain as described in step 350, discussed with respect to FIGURE 3. If the number of desired notional signatures is less than the number of traces, the system may be solved by minimizing an error function as described in step 380, discussed with respect to FIGURE 3. Method 600 returns the resulting notional signatures to step 260 of method 200 shown in FIGURE 2.

Modifications, additions, or omissions may be made to method 600 without departing from the scope of the present disclosure. For example, the steps may be performed in a different order than that described and some steps may be performed at the same time. For example, steps 620 and 630 may be performed simultaneously. Further, more steps may be added or steps may be removed without departing from the scope of the disclosure.

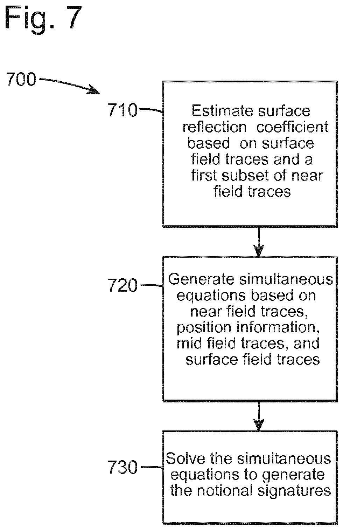

FIGURE 7 illustrates a flow chart of an example method 700 for computing notional signatures using additional data from surface field hydrophones in accordance with some embodiments of the present disclosure. For illustrative purposes, method 700 is described with respect to signal source 130 in seismic survey system 100, discussed with respect to FIGURE 1; however, method 700 may be used to compute notional signatures for any appropriate signal source. The steps of method 700 can be performed by a user, electronic or optical circuits, various computer programs, models, or any combination thereof, configured to process seismic traces. The programs and models may include instructions stored on a non-transitory computer-readable medium and operable to perform, when executed, one or more of the steps described below. The computer-readable media can include any system, apparatus, or device configured to store and retrieve programs or instructions such as a hard disk drive, a compact disc, flash memory, or any other suitable device. The programs and models may be configured to direct a processor or other suitable unit to retrieve and execute the instructions from the computer readable media. As discussed previously, collectively, the user, circuits, or computer programs and models used to process seismic traces may be referred to as a "processing tool." For example, the processing tool may be computing system 198 located on ship 110, discussed with respect to FIGURE 1. In some embodiments, the processing tool is located elsewhere, and receives information stored during the seismic survey. For example, computing system 198 may record seismic traces and position information and deliver them to an on-shore computing system for processing at a later time. Method 200, discussed with respect to FIGURE 2, may utilize method 700 to implement step 250; however, the processing tool performing the steps of method 700 may be the same processing tool performing the steps of method 200, or a different processing tool.

Method 700 begins at step 710, where the processing tool estimates a surface reflection coefficient based on the surface field traces and the near field traces. Step 710 may use any of the methods for estimating a surface reflection coefficient discussed above in connection with step 410, except that the surface field traces and the near field traces are used in place of the mid field traces.

In step 720, the processing tool generates a set of simultaneous equations based on the near field traces, the mid field traces, the position information, and the surface reflection coefficient estimated in step 710. Step 720 may use any method for constructing a system of equations described above in connection with step 420. For example, the processing tool may model the seismic waves generated by each air bubble using equations (3) and (4), discussed above in connection with step 340, discussed with relation to FIGURE 3. The processing tool may model surface reflection by including in each equation a term corresponding to the reflection of the wave from ocean surface 112, discussed with relation to FIGURE 1.

In step 730, the processing tool solves the set of simultaneous equations to generate the notional signatures. Mathematical methods for solving a determined set of simultaneous equations can include algebraic functions, matrix transformations, or other suitable methods. For example, if the number of desired notional signatures equals the number of traces, the system may be solved using matrix inversion in either the time or frequency domain as described in step 350, discussed with respect to FIGURE 3. If the number of desired notional signatures is less than the number of traces, the system may be solved by minimizing an error function as described in step 380, discussed with respect to FIGURE 3. Method 700 returns the resulting notional signatures to step 260 of method 200 shown in FIGURE 2.

Modifications, additions, or omissions may be made to method 700 without departing from the scope of the present disclosure. For example, the steps may be performed in a different order than that described and some steps may be performed at the same time. Further, more steps may be added or steps may be removed without departing from the scope of the disclosure.

This disclosure encompasses all changes, substitutions, variations, alterations, and modifications to the example embodiments herein that a person having ordinary skill in the art would comprehend. Similarly, where appropriate, the appended claims encompass all changes, substitutions, variations, alterations, and modifications to the example embodiments herein that a person having ordinary skill in the art would comprehend. For example, the set of simultaneous equations constructed in step 320 with respect to FIGURE 3 may model the wave propagation pattern as a parameterized pattern rather than a spherically symmetric pattern. Moreover, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. For example, a sensor does not have to be turned on but must be configured to receive reflected energy.

Any of the steps, operations, or processes described herein may be performed or implemented with one or more hardware or software modules, alone or in combination with other devices. In some embodiments, a software module is implemented with a computer program product comprising a computer-readable medium containing computer program code, which can be executed by a computer processor for performing any or all of the steps, operations, or processes described.

Embodiments of the disclosure may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a tangible computer readable storage medium or any type of media suitable for storing electronic instructions, and coupled to a computer system bus. Furthermore, any computing systems referred to in the specification may include a single processor or may be architectures employing multiple processor designs for increased computing capability. For example, the computing system described in methods 200, 300, 400, 500, 600, and 700 with respect to FIGURES 2-7 may be stored in tangible computer readable storage media.

Although the present disclosure has been described with several embodiments, changes, variations, alterations, transformations, and modifications may be suggested to one skilled in the art, and it is intended that the present disclosure encompass such changes, variations, alterations, transformations, and modifications as fall within the scope of the appended claims. Moreover, while the present disclosure has been described with respect to various embodiments, it is fully expected that the teachings of the present disclosure may be combined in a single embodiment as appropriate. Instead, the scope of the disclosure is defined by the appended claims.

**Claims**

1. A method for reconstructing the far field signature of a signal source having a plurality of seismic energy sources by combining data from near field and mid field sensors, comprising:

   receiving a first trace from a first sensor;
   receiving a second trace from a second sensor located in a different field from the first sensor;
   receiving position information comprising position information for the first sensor and position information for the second sensor;
   computing a plurality of notional signatures based on the first trace, the second trace, and the position information; and
   determining a far field signature by combining the plurality of notional signatures.

2. The method of Claim 1, wherein computing the plurality of notional signatures comprises:

   generating a set of simultaneous equations based on the first trace, the second trace, and the position information; and
   solving the set of simultaneous equations.

3. The method of Claim 1, wherein computing the plurality of notional signatures comprises:

   estimating a surface reflection coefficient based on the first trace;
   generating a set of simultaneous equations based on the second trace, the position information, and the surface reflection coefficient; and
   solving the set of simultaneous equations.

4. The method of Claim 1, wherein computing the plurality of notional signatures comprises:

   generating a first set of simultaneous equations based on the first trace and the position information for the first sensor;
   computing a first plurality of preliminary notional signatures by solving the first set of simultaneous equations;
   generating a second set of simultaneous equations based on the second trace and the position information for the second sensor;
   determining a second plurality of notional signatures by solving the second set of simultaneous equations; and
   combining the first plurality of notional signatures and the second plurality of notional signatures.

**5.** The method of Claim 1, further comprising:

receiving a third trace from a third sensor;
wherein the position information further comprises position information for the third sensor;
wherein computing the plurality of notional signatures comprises:

estimating a surface reflection coefficient based on the first trace;
adjusting the position information based on the first trace;
adjusting the surface reflection coefficient and the position information based on the second trace;
readjusting the surface reflection coefficient and the position information based on the second trace until
the surface reflection coefficient and the position information are within a threshold error;
generating a set of simultaneous equations based on the third trace, the position information for the third
sensor, and the surface reflection coefficient; and
solving the set of simultaneous equations.

**6.** The method of Claim 1, further comprising:

receiving a third trace from a third sensor;
wherein the position information further comprises position information for the third sensor;
wherein computing the plurality of notional signatures comprises:

estimating a surface reflection coefficient based on the first trace and the second trace;
constructing a set of simultaneous equations based on the first trace, the third trace, the position information,
and the surface reflection coefficient; and solving the set of simultaneous equations.

**7.** The method of Claim 1, the position information further comprising position information for a first seismic energy
source.

**8.** The method of Claim 1, further comprising utilizing the far field signature to generate an image of subsurface
geological structures.

**9.** A seismic survey system, comprising:

a source array comprising a plurality of seismic energy sources;
a first sensor configured to transform seismic waves into a first trace;
a second sensor configured to transform seismic waves into a second trace, the second sensor located in a
different field from the first sensor, the first and second sensors being near field and mid field sensors;
a computing system communicatively coupled to the source array, the first sensor, and the second sensor, the
computing system comprising:

a processor;
a memory communicatively coupled to the processor;
instructions stored in the memory that, when executed by the processor, cause the processor to:

receive the first trace from the first sensor;
receive the second trace from the second sensor;
receive position information comprising position information for the first sensor and position information
for the second sensor;
compute a plurality of notional signatures based on the first trace, the second trace, and the position
information; and
determine a far field signature by combining the plurality of notional signatures.

**10.** The system of Claim 9, wherein causing the processor to compute a plurality of notional signatures comprises
causing the processor to:

generate a set of simultaneous equations based on the first trace, the second trace, and the position information;
and
solve the set of simultaneous equations.

**11.** The system of Claim 9, wherein causing the processor to compute a plurality of notional signatures comprises causing the processor to:

estimate a surface reflection coefficient based on the first trace;
generate a set of simultaneous equations based on the second trace, the position information, and the surface reflection coefficient; and
solve the set of simultaneous equations.

**12.** The system of Claim 9, wherein causing the processor to compute a plurality of notional signatures comprises causing the processor to:

generate a first set of simultaneous equations based on the first trace and the position information for the first sensor;
compute a first plurality of preliminary notional signatures by solving the first set of simultaneous equations;
generate a second set of simultaneous equations based on the second trace and the position information for the second sensor;
compute a second plurality of preliminary notional signatures by solving the second set of simultaneous equations; and
combine the first plurality of notional signatures and the second plurality of notional signatures.

**13.** The system of Claim 9, further comprising:

a third sensor configured to transform seismic waves into a third trace;
the position information further comprising position information for the third sensor;
the instructions, when executed by a processor, further causing the processor to receive the third trace from the third sensor;
wherein causing the processor to compute a plurality of notional signatures comprises causing the processor to:

estimate a surface reflection coefficient based on the first trace;
adjust the position information based on the first trace;
adjust the surface reflection coefficient and the position information based on the second trace;
repeat the adjusting the surface reflection coefficient and the position information based on the second trace until the surface reflection coefficient and the position information are within a threshold error;
generate a set of simultaneous equations based on the third trace, the position information for the third sensor, and the surface reflection coefficient; and solve the set of simultaneous equations.

**14.** The system of Claim 9, further comprising:

a third sensor configured to transform seismic waves into a third trace;
the position information further comprising position information for the third sensor;
the instructions, when executed by a processor, further causing the processor to receive the third trace from the third sensor;
wherein causing the processor to compute a plurality of notional signatures comprises causing the processor to:

estimate a surface reflection coefficient based on the first trace and the second trace;
construct a set of simultaneous equations based on the first trace, the third trace, the position information, and the surface reflection coefficient; and
solve the set of simultaneous equations.

**15.** A non-transitory computer-readable medium, comprising instructions that, when executed by a processor, cause the processor to perform the method of any of Claims 1-8.

**Patentansprüche**

**1.** Verfahren zum Rekonstruieren einer Fernfeldsignatur einer Signalquelle mit einer Mehrzahl seismischer Energiequellen durch Kombinieren von Daten aus Nah- und Mittelfeldsensoren, umfassend:

Empfangen einer ersten Spur von einem ersten Sensor;

Empfangen einer zweiten Spur von einem zweiten Sensor, der in einem anderen Feld als der erste Sensor angeordnet ist;

Empfangen von Positiondaten, umfassend Positionsdaten des ersten Sensors und Positionsdaten des zweiten Sensors;

Berechnen einer Mehrzahl theoretischer Signaturen anhand der ersten und zweiten Spur und der Positionsdaten und

Ermitteln einer Fernfeldsignatur durch Kombinieren der Mehrzahl theoretischer Signaturen.

2.  Verfahren nach Anspruch 1, wobei die Berechnung der Mehrzahl theoretischer Signaturen umfasst:

Erzeugen einer Reihe simultaner Gleichungen anhand der ersten und zweiten Spur und der Positionsdaten und Auflösen der Reihe simultaner Gleichungen.

3.  Verfahren nach Anspruch 1, wobei die Berechnung der Mehrzahl theoretischer Signaturen umfasst:

Abschätzen eines Oberflächenreflexionskoeffizienten anhand der ersten Spur; Erzeugen einer Reihe simultaner Gleichungen anhand der zweiten Spur, der Positionsdaten und des Oberflächenreflexionskoeffizienten und Auflösen der Reihe simultaner Gleichungen.

4.  Verfahren nach Anspruch 1, wobei die Berechnung der Mehrzahl theoretischer Signaturen umfasst:

Erzeugen einer ersten Reihe simultaner Gleichungen anhand der ersten Spur und der Positionsdaten des ersten Sensors;

Berechnen einer ersten Mehrzahl vorläufiger theoretischer Signaturen durch Auflösen der ersten Reihe simultaner Gleichungen;

Erzeugen einer zweiten Reihe simultaner Gleichungen anhand der zweiten Spur und der Positionsdaten des zweiten Sensors;

Ermitteln einer zweiten Mehrzahl theoretischer Signaturen durch Auflösen der zweiten Reihe simultaner Gleichungen und

Kombinieren der ersten Mehrzahl theoretischer Signaturen und der zweiten Mehrzahl theoretischer Signaturen.

5.  Verfahren nach Anspruch 1, ferner umfassend:

Empfangen einer dritten Spur von einem dritten Sensor;

wobei die Positionsdaten ferner Positionsdaten des dritten Sensors umfassen;

wobei die Berechnung der Mehrzahl theoretischer Signaturen umfasst: Abschätzen eines Oberflächenreflexionskoeffizienten anhand der ersten Spur; Anpassen der Positionsdaten anhand der ersten Spur; Anpassen des Oberflächenreflexionskoeffizienten und der Positionsdaten anhand der zweiten Spur;

erneutes Anpassen des Oberflächenreflexionskoeffizienten und der Positionsdaten anhand der zweiten Spur solange, bis Oberflächenreflexionskoeffizient und Positionsdaten innerhalb eines Schwellenfehlers liegen; Erzeugen einer Reihe simultaner Gleichungen anhand der dritten Spur, der Positionsdaten des dritten Sensors und des Oberflächenreflexionskoeffizienten und

Auflösen der Reihe simultaner Gleichungen.

6.  Verfahren nach Anspruch 1, ferner umfassend:

Empfangen einer dritten Spur von einem dritten Sensor;

wobei die Positionsdaten ferner Positionsdaten des dritten Sensors umfassen;

wobei die Berechnung der Mehrzahl theoretischer Signaturen umfasst: Abschätzen eines Oberflächenreflexionskoeffizienten anhand der ersten und der zweiten Spur;

Erstellen einer Reihe simultaner Gleichungen anhand der ersten Spur, der dritten Spur, der Positionsdaten und des Oberflächenreflexionskoeffizienten und Auflösen der Reihe simultaner Gleichungen.

7.  Verfahren nach Anspruch 1, wobei die Positionsdaten ferner Positionsdaten einer ersten seismischen Energiequelle umfassen.

8.  Verfahren nach Anspruch 1, ferner umfassend Verwenden der Fernfeldsignatur zur Erzeugung eines Bilds geologischer Untergrundstrukturen.

9. Seismische Untersuchungsanlage, umfassend:

einen Quellarray, umfassend eine Mehrzahl seismischer Energiequellen;
einen ersten Sensor, der zum Umwandeln seismischer Wellen in eine erste Spur konfiguriert ist;
einen zweiten Sensor, der zum Umwandeln seismischer Wellen in eine zweite Spur konfiguriert ist, wobei der zweite Sensor sich in einem anderen Feld befindet als der erste Sensor und der erste und zweite Sensor Nah- und Mittelfeldsensoren sind;
ein Rechensystem, das mit dem Quellarray, dem ersten Sensor und dem zweiten Sensor in Kommunikationsverbindung steht, wobei das Rechensystem umfasst:

einen Prozessor;
einen Speicher, der mit dem Prozessor in Kommunikationsverbindung steht; im Speicher gespeicherte Befehle, die bei Ausführung durch den Prozessor diesen veranlassen:
die erste Spur vom ersten Sensor zu empfangen;
die zweite Spur vom zweiten Sensor zu empfangen;
Positionsdaten, die Positionsdaten des ersten Sensors und Positionsdaten des zweiten Sensors umfassen, zu empfangen;
eine Mehrzahl theoretischer Signaturen anhand der ersten und zweiten Spur und der Positionsdaten zu berechnen und
eine Fernfeldsignatur durch Kombinieren der Mehrzahl theoretischer Signaturen zu ermitteln.

10. System nach Anspruch 9, wobei das Veranlassen des Prozessors zum Berechnen einer Mehrzahl theoretischer Signaturen umfasst: Veranlassen des Prozessors:

zum Erzeugen einer Reihe simultaner Gleichungen anhand der ersten und zweiten Spur und der Positionsdaten und
zum Auflösen der Reihe simultaner Gleichungen.

11. System nach Anspruch 9, wobei das Veranlassen des Prozessors zum Berechnen einer Mehrzahl theoretischer Signaturen umfasst: Veranlassen des Prozessors:

zum Abschätzen eines Oberflächenreflexionskoeffizienten anhand der ersten Spur;
zum Erstellen einer Reihe simultaner Gleichungen anhand der zweiten Spur, der Positionsdaten und des Oberflächenreflexionskoeffizienten und
zum Auflösen der Reihe simultaner Gleichungen.

12. System nach Anspruch 9, wobei das Veranlassen des Prozessors zum Berechnen einer Mehrzahl theoretischer Signaturen umfasst: Veranlassen des Prozessors:

zum Erzeugen einer ersten Reihe simultaner Gleichungen anhand der ersten Spur und der Positionsdaten des ersten Sensors;
Berechnen einer ersten Mehrzahl vorläufiger theoretischer Signaturen durch Auflösen der ersten Reihe simultaner Gleichungen;
Erzeugen einer zweiten Reihe simultaner Gleichungen anhand der zweiten Spur und der Positionsdaten des zweiten Sensors;
Ermitteln einer zweiten Mehrzahl theoretischer Signaturen durch Auflösen der zweiten Reihe simultaner Gleichungen und
zum Kombinieren der ersten Mehrzahl theoretischer Signaturen und der zweiten Mehrzahl theoretischer Signaturen.

13. System nach Anspruch 9, ferner umfassend:

einen dritten Sensor, der zum Umwandeln seismischer Wellen in eine erste Spur konfiguriert ist,
wobei die Positionsdaten ferner Positionsdaten des dritten Sensors umfassen;
die Befehle bei Ausführung durch einen Prozessor diesen ferner veranlassen, die dritte Spur vom dritten Sensor zu empfangen;

wobei das Veranlassen des Prozessors zum Berechnen einer Mehrzahl theoretischer Signaturen umfasst: Veranlassen des Prozessors:

zum Abschätzen eines Oberflächenreflexionskoeffizienten anhand der ersten Spur;
Anpassen der Positionsdaten anhand der ersten Spur;
Anpassen des Oberflächenreflexionskoeffizienten und der Positionsdaten anhand der zweiten Spur;
Wiederholen der Anpassung des Oberflächenreflexionskoeffizienten und der Positionsdaten anhand der zweiten Spur solange, bis Oberflächenreflexionskoeffizient und Positionsdaten innerhalb eines Schwellenfehlers liegen; Erzeugen einer Reihe simultaner Gleichungen anhand der dritten Spur, der Positionsdaten des dritten Sensors und des Oberflächenreflexionskoeffizienten und zum Auflösen der Reihe simultaner Gleichungen.

**14.** System nach Anspruch 9, ferner umfassend:

einen dritten Sensor, der zum Umwandeln seismischer Wellen in eine erste Spur konfiguriert ist,
wobei die Positionsdaten ferner Positionsdaten des dritten Sensors umfassen;
die Befehle bei Ausführung durch einen Prozessor diesen ferner veranlassen, die dritte Spur vom dritten Sensor zu empfangen;
wobei das Veranlassen des Prozessors zum Berechnen einer Mehrzahl theoretischer Signaturen umfasst: Veranlassen des Prozessors:

Abschätzen eines Oberflächenreflexionskoeffizienten anhand der ersten und der zweiten Spur;
Erstellen einer Reihe simultaner Gleichungen anhand der ersten Spur, der dritten Spur, der Positionsdaten und des Oberflächenreflexionskoeffizienten und
zum Auflösen der Reihe simultaner Gleichungen.

**15.** Nicht flüchtiger computerlesbarer Datenträger, umfassend Befehle, die bei Ausführung durch einen Prozessor diesen veranlassen, das Verfahren nach einem der Ansprüche 1 - 8 auszuführen.

## Revendications

**1.** Procédé de reconstruction de la signature en champ lointain d'une source de signal ayant une pluralité de sources d'énergie sismique en combinant des données provenant des capteurs à champ proche et de capteurs à champ moyen, comprenant :

la réception d'une première trace provenant d'un premier capteur ;
la réception d'une deuxième trace provenant d'un deuxième capteur situé dans un champ différent du premier capteur ;
la réception d'informations de position comprenant des informations de position pour le premier capteur et des informations de position pour le deuxième capteur ;
le calcul d'une pluralité de signatures notionnelles sur la base de la première trace, de la deuxième trace et des informations de position ; et
la détermination d'une signature en champ lointain en combinant la pluralité de signatures notionnelles.

**2.** Procédé selon la revendication 1, dans lequel le calcul de la pluralité de signature notionnelles comprend :

la génération d'un ensemble d'équations simultanées sur la base de la première trace, de la deuxième trace et des informations de position ; et
la résolution de l'ensemble d'équations simultanées.

**3.** Procédé selon la revendication 1, dans lequel le calcul de la pluralité de signature notionnelles comprend :

l'estimation d'un coefficient de réflexion de surface sur la base de la première trace ;
la génération d'un ensemble d'équations simultanées sur la base de la deuxième trace, des informations de position et du coefficient de réflexion de surface ; et
la résolution de l'ensemble d'équations simultanées.

**4.** Procédé selon la revendication 1, dans lequel le calcul de la pluralité de signature notionnelles comprend :

la génération d'un premier ensemble d'équations simultanées sur la base de la première trace et des informations de position pour le premier capteur ;
le calcul d'une première pluralité de signatures notionnelles préliminaires en résolvant le premier ensemble d'équations simultanées ;
la génération d'un deuxième ensemble d'équations simultanées sur la base de la deuxième trace et des informations de position pour le deuxième capteur ;
la détermination d'une deuxième pluralité de signatures notionnelles en résolvant le deuxième ensemble d'équations simultanées ; et
la combinaison de la première pluralité de signatures notionnelles et de la deuxième pluralité de signatures notionnelles.

**5.** Procédé selon la revendication 1, comprenant en outre :

la réception d'une troisième trace provenant d'un troisième capteur ;
les informations de position comprenant en outre des informations de position pour le troisième capteur ;
le calcul de la pluralité de signatures notionnelles comprenant :

l'estimation d'un coefficient de réflexion de surface sur la base de la première trace ;
l'ajustement des informations de position sur la base de la première trace ;
l'ajustement du coefficient de réflexion de surface et des informations de position sur la base de la deuxième trace ;
le réajustement du coefficient de réflexion de surface des informations de position sur la base de la deuxième trace jusqu'à ce que le coefficient de réflexion de surface et les informations de position soient à l'intérieur d'une erreur de seuil ;
la génération d'un ensemble d'équations simultanées sur la base de la troisième trace, des informations de position pour le troisième capteur et du coefficient de réflexion de surface ; et
la résolution de l'ensemble d'équations simultanées.

**6.** Procédé selon la revendication 1, comprenant en outre :

la réception d'une troisième trace provenant d'un troisième capteur ;
les informations de position comprenant en outre des informations de position pour le troisième capteur ;
le calcul de la pluralité de signatures notionnelles comprenant :

l'estimation d'un coefficient de réflexion de surface sur la base de la première trace et de la deuxième trace ;
la construction d'un ensemble d'équations simultanées sur la base de la première trace, de la troisième trace, des informations de position et du coefficient de réflexion de surface ; et
la résolution de l'ensemble d'équations simultanées.

**7.** Procédé selon la revendication 1, les informations de position comprenant en outre des informations de position pour une première source d'énergie sismique.

**8.** Procédé selon la revendication 1, comprenant en outre l'utilisation de la signature en champ lointain pour générer une image de structures géologiques souterraines.

**9.** Système de surveillance sismique comprenant :

une matrice de sources comprenant une pluralité de sources d'énergie sismique ;
un premier capteur conçu pour transformer les ondes sismiques en une première trace ;
un deuxième capteur conçu pour transformer les ondes sismiques en une deuxième trace, le deuxième capteur étant situé dans un champ différent de celui du premier capteur, le premier et le deuxième capteurs étant des capteurs de champ proche et de champ moyen ;
un système de calcul couplé de manière communicative avec la matrice de sources, le premier capteur et le deuxième capteur, le système de calcul comprenant :

un processeur ;

une mémoire couplée de manière communicative au processeur ;

des instructions stockées dans la mémoire qui, lorsqu'elles sont exécutées par le processeur, font en sorte que le processeur :

reçoive la première trace provenant du premier capteur ;
reçoive la deuxième trace provenant du deuxième capteur ;
reçoive les informations de position comprenant les informations de position pour le premier capteur et les informations de position pour le deuxième capteur ;
calcule une pluralité de signatures notionnelles sur la base de la première trace, de la deuxième trace et des informations de position ; et
détermine une signature en champ lointain en combinant la pluralité de signatures notionnelles.

10. Système selon la revendication 9, dans lequel l'action de calcul par le processeur d'une pluralité de signatures notionnelles comprend le fait que le processeur :

génère un ensemble d'équations simultanées sur la base de la première trace, de la deuxième trace et des informations de position ; et
résout l'ensemble d'équations simultanées.

11. Système selon la revendication 9, dans lequel l'action de calcul par le processeur d'une pluralité de signatures notionnelles comprend le fait que le processeur :

estime un coefficient de réflexion de surface sur la base de la première trace ;
génère un ensemble d'équations simultanées sur la base de la deuxième trace, des informations de position et du coefficient de réflexion de surface ; et
résout l'ensemble d'équations simultanées.

12. Système selon la revendication 9, dans lequel l'action de calcul par le processeur d'une pluralité de signatures notionnelles comprend le fait que le processeur :

génère un premier ensemble d'équations simultanées sur la base de la première trace et des informations de position pour le premier capteur ;
calcule une première pluralité de signatures notionnelles préliminaires en résolvant le premier ensemble d'équations simultanées ;
génère un deuxième ensemble d'équations simultanées sur la base de la deuxième trace et des informations de position pour le deuxième capteur ;
calcule une deuxième pluralité de signatures notionnelles préliminaires en résolvant le deuxième ensemble d'équations simultanées ; et
combine la première pluralité de signatures notionnelles et la deuxième pluralité de signatures notionnelles.

13. Système selon la revendication 9, comprenant en outre :

un troisième capteur conçu pour transformer des ondes sismiques en une troisième trace ;
des informations de position comprenant en outre les informations de position pour le troisième capteur ;
des instructions qui, lorsqu'elles sont exécutées par un processeur, font en outre en sorte que le processeur reçoive la troisième trace provenant du troisième capteur ;
l'action de calcul, par le processeur, d'une pluralité de signatures notionnelles comprend le fait que le processeur :

estime un coefficient de réflexion de surface sur la base de la première trace ;
ajuste les informations de position sur la base de la première trace ;
ajuste le coefficient de réflexion de surface et les informations de position sur la base de la deuxième trace ;
répète l'ajustement du coefficient de réflexion de surface et des informations de position sur la base de la deuxième trace jusqu'à ce que le coefficient de réflexion de surface et les informations de position soient à l'intérieur d'une erreur de seuil ;
génère un ensemble d'équations simultanées sur la base de la troisième trace, des informations de position pour le troisième capteur et du coefficient de réflexion de surface ; et
résout l'ensemble d'équations simultanées.

**14.** Système selon la revendication 9, comprenant en outre :

un troisième capteur conçu pour transformer des ondes sismiques en une troisième trace ;
des informations de position comprenant en outre les informations de position pour le troisième capteur ;
des instructions qui, lorsqu'elles sont exécutées par un processeur, font en outre en sorte que le processeur reçoive la troisième trace provenant du troisième capteur ;
l'action de calcul, par le processeur, d'une pluralité de signatures notionnelles comprend le fait que le processeur :

estime un coefficient de réflexion de surface sur la base de la première trace et de la deuxième trace ;
construit un ensemble d'équations simultanées sur la base de la première trace, de la troisième trace, des informations de position et du coefficient de réflexion de surface ; et
résout l'ensemble d'équations simultanées.

**15.** Support non transitoire lisible par un ordinateur, comprenant des instructions qui, lorsqu'elles sont exécutées par un processeur, font en sorte que le processeur exécute le procédé selon l'une des revendications 1 à 8.

# Fig. 1

# Fig. 2

200

A

210 — Receive a near field trace

220 — Receive a mid field trace

230 — Receive a surface field trace

240 — Receive position information

250 — Receive notional signatures

260 — Determine a far field signature by combining the notional signatures

# Fig. 3

300

310 — Determine number of notional signatures needed to model the seismic sources

312 — Calculate the total number of near field and mid field traces

Number of traces< number of notional signatures? —320 — Yes

A

No — Number of traces> number of notional signatures? —330 — Yes

Generate simultaneous equations based on near field traces, mid field traces, and position information — 340

360 — Generate error function based on measurement design and quality

Solve the simultaneous equations to generate the notional signatures — 350

370 — Generate simultaneous equations based on near field traces, mid field traces, position information, and error function

380 — Minimize the error term in the simulatious equations to generate the notional signatures

# Fig. 4

400

410 — Estimate surface reflection coefficient based on mid field traces

420 — Generate simultaneous equations based on near field traces, position information, and mid field traces

430 — Solve the simultaneous equations to generate the notional signatures

# Fig. 5

500

510 — Generate a first set of simultaneous equations based on near field traces and positions information

520 — Compute a first set of preliminary notional signatures by solving the first set of simultaneous equations

530 — Generate a second set of simultaneous equations based on mid field traces and position information

540 — Compute a second set of preliminary notional signatures by solving the second set of simultaneous equations

550 — Combine the first and second sets of preliminary notional signatures to generate the notional signatures

## Fig. 6

600

```
610 ── ┌─────────────────────┐
        │ Estimate surface     │
        │ reflection coefficient│
        │ based on near         │
        │ field traces          │
        └─────────────────────┘
                  │
                  ▼
620 ── ┌─────────────────────┐
        │ Adjust position      │
        │ information based     │
        │ on first subset of near│
        │ field traces          │
        └─────────────────────┘
                  │
                  ▼
630 ── ┌─────────────────────┐
        │ Adjust surface       │
   ┌───►│ reflection coefficient│
   │    │ and position          │
   │    │ information based      │
   │    │ on mid field traces    │
   │    └─────────────────────┘
   │              │
   │              ▼
  No
```

640

◇ Are surface
reflection coefficient and
position information within
a threshold error?

Yes

650 ── ┌─────────────────────┐
│ Generate simultaneous │
│ equations based on    │
│ second subset of      │
│ near field traces,    │
│ mid field traces,     │
│ position information,  │
│ and surface reflection │
│ coefficient           │
└─────────────────────┘

660 ── ┌─────────────────────┐
│ Solve the simultaneous │
│ equations to generate  │
│ the notional signatures│
└─────────────────────┘

# Fig. 7

700

710 — Estimate surface reflection coefficient based on surface field traces and a first subset of near field traces

720 — Generate simultaneous equations based on near field traces, position information, mid field traces, and surface field traces

730 — Solve the simultaneous equations to generate the notional signatures

**REFERENCES CITED IN THE DESCRIPTION**

**Patent documents cited in the description**

- GB 2468912 A